# DEMANDE DE BREVET EUROPEEN

(11) **EP 1 676 815 A1**
(43) Date de publication de la demande: **05.07.2006**
(21) Numéro de dépôt: 05028352.2
(22) Date de dépôt: 23.12.2005
(51) Int. Cl.: C02F 1/48, C02F 103/00

(54) **Procédé de traitement électromagnétique des liquides**

(30) Priorité: 28.12.2004 CH 21562004
(71) Demandeur: Planet Horizons Technologies SA, 3960 Sierre (CH)
(72) Inventeur: Thut, Walter, 3963 Crans-Montana (CH); Valette, Eric, 1977 Icogne (CH); Masserey, Nicolas, 3963 Crans-Montana (CH)

(57) **Abrégé**

L'invention décrit le traitement physique de liquides soumis à un champ électromagnétique responsable d'une modification physico-chimique, biologique et structurelle mise à profit dans différentes applications. Le champ électromagnétique présente des caractéristiques de valeur de tension, de valeur de courant, de fréquence ou de combinaisons de fréquences, de séquences de pulsations, et de forme de signal de tension, choisies pour obtenir le traitement désiré des liquides.

Elle se base sur un calcul précis de la fréquence ou des fréquences combinées spécifiques pouvant influer sur l'état d'un milieu aqueux de manière à ce qu'il trouve ou retrouve l'état désiré. Le signal électromagnétique peut être émis à partir de bobines (procédé 1) qui combine également un tourbillon de forme spéciale afin d'optimiser la transmission de l'information électromagnétique au liquide, ou à partir d'antennes (procédé 2).

## Description

### Domaine technique

La présente invention concerne un procédé et une installation de traitement des liquides utilisant un champ électromagnétique et dont l'effet est la modification physico-chimique, biologique et structurelle mise à profit dans l'industrie, l'agriculture, les habitations, les plans d'eau, les réseaux de distributions et de traitements des eaux potables et usées. Elle s'appuie sur un diagnostic précis du milieu et sur un calcul basé sur la physique quantique afin de tendre vers l'état désiré.

Les besoins en eau des pays industrialisés sont très importants (eaux de consommation, eaux industrielles, eaux agricoles) et la qualité de cette eau se détériore graduellement. De ce fait, la gestion de l'eau figure parmi les grands enjeux actuels, que se soit au niveau de la ressource en eau, du traitement de l'eau avant utilisation ou du traitement des rejets dans l'environnement.

### Etat de la technique antérieure

Les traitements conventionnels de l'eau potable sont des traitements physiques (dégrillage, filtration sur sable, etc.), physico-chimiques (coagulation, floculation), complétés d'une étape de finition dont le but est d'éliminer des molécules organiques solubles et d'éviter la reviviscence de micro-organismes comme la chloration, l'ozonation, l'oxydation par le peroxyde d'hydrogène, le rayonnement ultraviolet, la nanofiltration, l'adsorption sur charbon actif. Les traitements actuels favorisent également les étapes de filtration membranaire (microfiltration, ultrafiltration) ou d'osmose inverse.

Dans le domaine des eaux de rejets, les étapes correspondent respectivement au prétraitement (dégrillage, désablage, déshuilage, tamisage), au traitement biologique (aérobie ou anaérobie), au traitement de clarification (coagulation, floculation, flottation, décantation) suivis d'une dernière étape de filtration, d'adsorption ou de désinfection (physique ou chimique).

En ce qui concerne le traitement des plans d'eau, des quantités de plus en plus importantes de produits chimiques sont utilisées afin de lutter contre l'eutrophisation croissante de ces milieux.

Des systèmes mettant en oeuvre des champs électromagnétiques ont été développés ces dernières années afin d'offrir une voie alternative ou complémentaire à certains traitements conventionnels, principalement aux traitements chimiques. L'approche aujourd'hui la plus généralisée consiste à la prévention de l'entartrage, principalement dans les réseaux d'eaux chaudes. A la lecture des brevets les plus récents sur ce sujet, les inventions ne se distinguent pas à grand-chose, une majorité utilise des aimants permanents disposés de certaines manières dans des tubes ou installations, d'autres encore des bobines permettant de générer un champ électromagnétique spécifique, parfois combinées à d'autres techniques. La prévention de la corrosion est également une application possible. Une autre approche plus récente consiste à traiter l'eau d'irrigation en améliorant la répartition et l'assimilation des nutriments, ce qui permet de réduire les dosages. L'installation de tels systèmes dans les stations d'épuration commence tout doucement à voir le jour. Utilisés jusqu'à présent comme moyen de destruction des micro-organismes (ultrasons, champs électriques pulsés), les traitements physiques tels les traitements magnétiques ou électromagnétiques font leur apparition combinés à une adjonction de poudre ferromagnétique mélangée aux boues afin d'améliorer la décantation de ces dernières. Dans toutes les différentes inventions répertoriées dans le traitement des liquides par voie magnétique ou électromagnétique, ce qui diffère n'est pas tant le procédé en lui-même, souvent similaire d'une invention à l'autre, ni même sa combinaison avec d'autres systèmes pouvant quand même s'avérer très utiles parfois, mais c'est surtout le choix judicieux des caractéristiques de valeur de tension, de valeur de courant, de fréquence ou de combinaisons de fréquences et de forme de signal de tension pour obtenir le traitement désiré des liquides qui reste le plus significatif. C'est en effet dans l'intensité du champ rayonné et encore plus dans la ou les fréquences émises que va se jouer l'effet du traitement électromagnétique. Certaines conditions et dispositions pourront améliorer cet effet mais la base reste et restera dans les choix précédemment cités.

Le traitement physique des liquides par champ électromagnétique est bénéfique dans un grand nombre d'applications différentes, un même système peut être utilisé indifféremment dans telle ou telle application, ce qui changera et qui permettra d'avoir l'effet désiré pour l'application visée est le choix judicieux des caractéristiques de valeur de tension, de valeur de courant, de fréquence ou de combinaisons de fréquences, de séquences de pulsations, et de forme de signal de tension.

### Exposé de l'invention

L'invention a été conçue pour offrir un traitement électromagnétique couvrant une large gamme d'applications aussi variées les unes que les autres, avec une meilleure efficacité et/ou une considération écologique plus importante que les techniques de l'art antérieur.

Le procédé de l'invention est basé sur l'émission de champs électromagnétiques se situant dans la gamme 0-200 kHz. Deux procédés sont utilisés afin de répondre aux mieux aux exigences des applications visées. Un premier utilisant des bobines placées dans un tube avec un système de génération de tourbillons spécifiques en amont des bobines afin d'optimiser l'information électromagnétique transmise au flux de liquide. Un second utilisant des antennes, disposées au sein d'un réservoir.

La base de ce procédé repose sur le choix des caractéristiques de valeur de tension, de valeur de courant, de fréquence ou de combinaisons de fréquences, de séquences de pulsations, et de forme de signal de tension pour obtenir le traitement désiré des liquides. En cela il s'appuie sur un diagnostic précis du milieu reposant sur la physique quantique et un calcul des fréquences de résonance des différents éléments chimiques et de leurs composés, ainsi que sur une connaissance de l'état électromagnétique global du milieu à l'aide d'un appareil appelé BFA (Bio-Frequencies Analysis) qui permet d'obtenir une signature électromagnétique précise de ce dernier.

En ce qui concerne le calcul des fréquences de résonance, il repose sur la relation fondamentale de De Broglie qui permet de relier la fréquence d'un élément à sa masse. Le Dr. Joël Sternheimer s'est également servi de cette approche pour calculer les fréquences de résonance à transmettre aux plantes afin d'influencer directement certaines protéines ou acides aminés.

En ce qui a trait au BFA, c'est un appareil que nous avons développé qui analyse les bio-fréquences, il détecte et mesure les vibrations énergétiques de la matière biologique. La technique est basée sur l'invention de M. Theremin au début du vingtième siècle. L'énergie vibratoire du liquide (l'eau principalement) est détectée par l'appareil. A l'aide de logiciels d'analyse de fréquences, les données mesurées sont ensuite introduites dans un graphique tridimensionnel dont les axes sont : la fréquence (6), l'intensité (7) et le temps (8). Les données techniques précises des fréquences sont analysées dans un graphique bidimensionnel. L'examen de ces données associé au calcul des fréquences de résonance et des lois harmoniques permet d'apporter une solution efficace au milieu à traiter.

L'invention a donc pour objet un procédé de traitement des liquides par champs électromagnétiques dont l'effet est la modification des caractéristiques physico-chimiques, biologiques et structurelles, procédé caractérisé en ce que :
- Le champ électromagnétique présente des caractéristiques de valeur de tension, de valeur de courant, de fréquence ou de combinaisons de fréquences, de séquences de pulsations, et de forme de signal de tension découlant des calculs et des mesures précédemment introduits.
- Le champ électromagnétique peut être généré par des bobines placées dans un tube avec un système de génération de tourbillons spécifiques en amont des bobines afin d'optimiser l'information électromagnétique transmise au liquide lorsqu'il s'agit d'un flux à traiter (procédé 1).
- Le champ électromagnétique peut être généré par des antennes lorsqu'il s'agit de traiter un bassin, réservoir ou plan d'eau (procédé 2).
- Le champ électromagnétique peut être généré par une combinaison des procédés 1 et 2.

Les procédés selon l'invention peuvent s'appliquer :
- au traitement des effluents et des boues de stations d'épuration en réacteurs aérobies, anaérobies, en bassins de décantation, en bassins d'épaississement et en systèmes de déshydratation des boues ;
- au traitement des plans d'eau ;
- au traitement de l'eau d' irrigation ;
- au traitement des eaux de distribution.

### Brève description des dessins

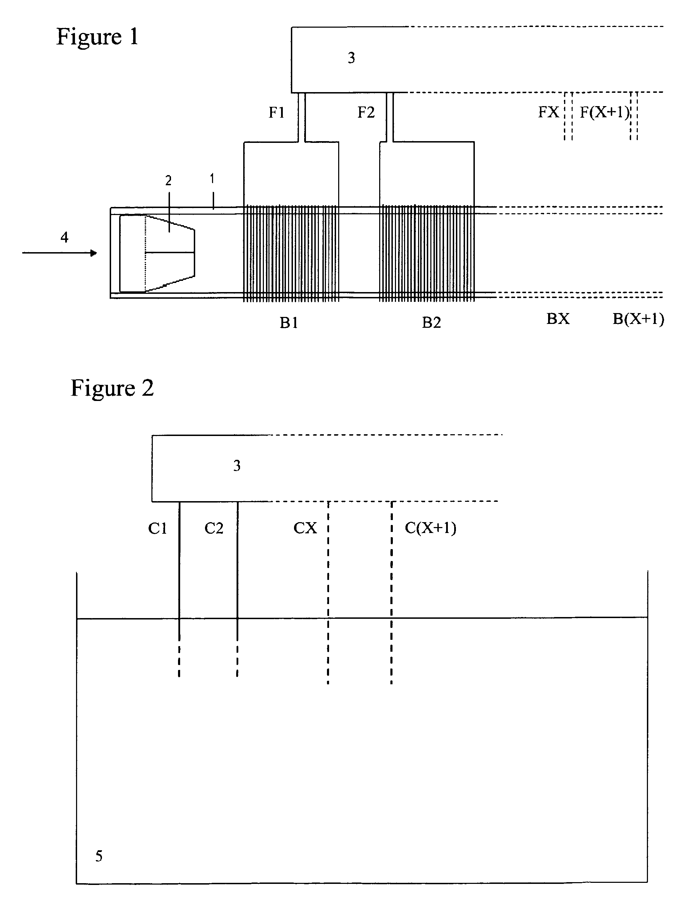

La figure 1 est un schéma d'une installation de traitement d'effluents selon le procédé 1.

La figure 2 est un schéma d'une installation de traitement d'un réservoir selon la procédé 2.

La figure 3 est un graphique tridimensionnel des fréquences mesurées à l'aide de l'appareil BFA puis analysées.

La figure 4 est un graphique bidimensionnel des fréquences mesurées à l'aide de l'appareil BFA puis analysées.

### Description détaillée de 2 modes de réalisation de l'invention

La première description porte sur une réalisation de l'invention via le procédé 1. Elle se base sur le brevet suisse n° 691967 où le champ électromagnétique peut être généré par un certain nombre de bobines (B 1 à B(X+1), F1 à F(X+1) étant les fils correspondants) placées dans un tube (1) avec un système de génération de tourbillons spécifiques (2) en amont des bobines afin d'optimiser l'information électromagnétique transmise au flux de liquide (4). Les bobines peuvent être disposées de manière à avoir des polarités identiques ou inversées. Une électronique spécifique (3) permet de générer une tension comprise entre quelques volts et quelques dizaines de volts, un courant compris entre quelques milliampères et quelques dizaines d'ampères, un signal de fréquence compris dans la gamme 0-200 kHz (principalement dans la gamme 0-20 kHz), des séquences de pulsations variant les temps de marche et les temps d'arrêt de zéro à quelques secondes, et un signal de forme sinusoïdal, carré, triangulaire ou en dents de scie en champ pulsé ou alternatif. La fréquence peut être réglée de manière à générer des phénomènes de résonance, plusieurs fréquences peuvent également être combinées de façon harmonique en fonction des applications visées. Un calcul des fréquences de résonance des différents éléments chimiques et de leurs composés, ainsi qu'une connaissance de l'état électromagnétique global du milieu à l'aide de l'appareil BFA permettent justement un réglage optimum de ces paramètres pour un traitement donné. Cette invention peut notamment être appliquée dans les réseaux d'eau des habitations (eau potable et/ou eau de chaudière), les réseaux d'eau communaux, les réseaux d'eau des tours de refroidissement, les réseaux d'eau industriels, les réseaux d'eau d'irrigation, les réseaux d'alimentation de plans d'eau.

La seconde description porte sur une réalisation de l'invention via le procédé 2, elle est tout à fait novatrice dans ce domaine. Elle se base sur la disposition d'antennes au sein de bassins, réservoirs ou plans d'eau. Des câbles peuvent aisément jouer ce rôle, mais tout autre système peut également être utilisé, notamment des systèmes se servant d'installations déjà présentes. L'électronique (3) reste similaire à celle décrite pour le procédé 1. En sortie de cette électronique un ou plusieurs câbles (C1 à C(X+1)) de différentes fréquences sont disposés d'une certaine manière au sein du réservoir (5). Par exemple, dans nos applications au sein de bassins de décantation, les câbles sont disposés autour du bassin, en spirale de haut en bas du bassin, dans le sens horaire. Comme la description précédente, la fréquence peut être réglée de manière à générer des phénomènes de résonance, plusieurs fréquences peuvent également être combinées de façon harmonique en fonction des résultats souhaités. Cette invention peut notamment être appliquée dans les plans d'eau, dans les bassins de stations d'épuration (bassins en aérobie, anaérobie, bassins de décantation, bassins d'épaississement, etc.), dans les réservoirs d'eau potable, dans les bassins de rétention, dans les retenues des barrages.

## Revendications

1. Procédé de traitement physique des liquides dans lequel un flux ou un réservoir est soumis à un champ électromagnétique dont l'effet est la modification des caractéristiques physico-chimiques, biologiques et structurelles mise à profit en fonction de l'application visée.
Le champ électromagnétique présente des caractéristiques de valeur de tension, de valeur de courant, de fréquence ou de combinaisons de fréquences, de séquences de pulsations, et de forme de signal de tension choisies pour obtenir le traitement désiré des liquides. Ce choix s'effectue sur la base d'un diagnostic précis qui s'appuie sur la physique quantique et un calcul des fréquences de résonance des différents éléments chimiques et de leurs composés ainsi que sur une connaissance de l'état électromagnétique global du milieu à l'aide de l'appareil BFA qui permet d'obtenir une signature électromagnétique précise du milieu.

2. Procédé selon la revendication 1, **caractérisé en ce que** les champs électromagnétiques sont émis à partir de plusieurs bobines et **en ce qu'**une turbulence spécifique est produite en amont de ces bobines, conformément au brevet suisse n° 691967.

3. Procédé selon la revendication 1, **caractérisé en ce que** les champs électromagnétiques sont émis à partir de une ou plusieurs antennes disposées au sein d'un réservoir, bassin ou plan d'eau.

4. Procédé selon la revendication 1, combinant les revendications 2 et 3.

5. Procédé selon les revendications 1 à 4, **caractérisé en ce que** ladite modification des caractéristiques physico-chimiques, biologiques et structurelles permet une prévention de l'entartrage par une modification du type des cristaux présents dans le liquide, une suppression ou une réduction du dosage des produits chimiques (oxydants, coagulants, floculants, nutriments, pesticides, etc.), une suppression ou une réduction de certains phénomènes de corrosion liés à la qualité du liquide.

6. Procédé selon les revendications 1 à 4, **caractérisé en ce que** ladite modification des caractéristiques physico-chimiques, biologiques et structurelles permet une accélération du processus de germination et de croissance des végétaux et une résistance accrue aux maladies.

7. Procédé selon les revendications 1 à 4, **caractérisé en ce que** ladite modification des caractéristiques physico-chimiques, biologiques et structurelles permet une réduction des phénomènes liés à l'eutrophisation d'un plan d'eau, une meilleure transparence et une meilleure oxygénation de l'eau.

8. Procédé selon les revendications 1 à 4, **caractérisé en ce que** ladite modification des caractéristiques physico-chimiques, biologiques et structurelles permet une meilleure séparation solide/liquide dans tous les processus de décantation, filtration et centrifugation, une meilleure agrégation de colloïdes et/ou matières en suspension, une amélioration ou une inhibition de l'activité des microorganismes.

9. Application du procédé selon les revendications 1 à 8 :
- au traitement des effluents et des boues de stations d'épuration en réacteurs aérobies, anaérobies, en bassins de décantation, en bassins d'épaississement et en systèmes de déshydratation des boues ;
- au traitement des plans d'eau;
- au traitement de l'eau d'irrigation ;
- au traitement des eaux de distribution.

10. Utilisation de l'appareil BFA élaboré d'après les travaux de M. Theremin (brevet US de 1928) comme outils de diagnostic.
